# EUROPÄISCHE PATENTSCHRIFT

(11) **EP 1 740 425 B1**
(45) Veröffentlichungstag und Bekanntmachung des Hinweises auf die Patenterteilung: **20.08.2008**
(21) Anmeldenummer: 05708048.3
(22) Anmeldetag: 23.02.2005
(51) Int. Cl.: B60S 1/40

(54) **WISCHBLATT**
WIPER BLADE
RACLETTE D'ESSUIE-GLACE

(30) Priorität: 22.04.2004 DE 102004019541
(43) Veröffentlichungstag der Anmeldung: 10.01.2007
(73) Patentinhaber: ROBERT BOSCH GMBH, 70442 Stuttgart (DE)
(72) Erfinder: VAN BEALEN, David, B-3020 Herent (BE)
(86) Internationale Anmeldenummer: PCT/EP2005/050761
(87) Internationale Veröffentlichungsnummer: WO 2005/102802

(56) Entgegenhaltungen:
- WO-A-03/033316
- FR-A- 2 600 291
- FR-A- 2 738 201

## Beschreibung

### Stand der Technik

Die Erfindung geht von einem Wischblatt nach dem Oberbegriff des Anspruchs 1 aus.

Aus der WO 03/033316 A1 ist ein Scheibenwischer mit einem gelenkfreien Wischblatt bekannt, das einen Gelenkanschluss für eine Wischstange eines Wischerarms mit einem hakenförmigen Ende aufweist. Der Gelenkanschluss umfasst eine Anschlussvorrichtung, die mittels Krallen auf einem Tragelement des Wischblatts befestigt ist. Die Anschlussvorrichtung besitzt eine Gelenkachse, die in ihren zwei Seitenwänden gehalten ist, und auf der der Adapter mittels einer zum Wischblatt hin offenen Nabe schwenkbar gelagert ist.

Das hakenförmige Ende der Wischstange wird von der Frontseite her über den Adapter geschoben und liegt dann mit der Innenseite des gebogenen Teils an einer konvexen Anlagefläche am Umfang der offenen Nabe und mit der Innenfläche seines oberen Schenkels an einer Auflagefläche des Adapters an. Eine Seitenführung zwischen dem hakenförmigen Ende und dem Adapter wird durch Seitenwangen des Adapters erzielt, die über die Anlagefläche und die Auflagefläche vorstehen. Das hakenförmige Ende verrastet mit dem Adapter mittels Rastnasen, die im Frontbereich an Verlängerungen der Seitenwangen des Adapters angeordnet sind und während der Montage nach außen elastisch nachgeben. Im montierten Zustand nehmen die Rastnasen ihre Ausgangsposition wieder ein und verhindern, dass das hakenförmige Ende sich im Betrieb vom Adapter löst.

Um zu verhindern, dass die Rastnasen durch kurzzeitige Spitzenbelastungen des Wischblatts überdrückt werden können, ist eine Kappe vorgesehen, die den Frontbereich der Anschlussvorrichtung bildet und mit dieser lösbar verbunden ist. Die Kappe verhindert mit inneren Anlageflächen, dass die Rastnasen nach außen nachgeben und somit überdrückt werden können. Die Seitenwände der Anschlussvorrichtung überdecken seitlich den Adapter und das hakenförmige Ende der Wischstange und sind im Bereich der Kappe entsprechend ausgeklinkt. Eine Seitenwand besitzt an der der Kappe zugewandten Stirnfläche ein Lagerelement, dessen Lagerachse im Wesentlichen senkrecht zu einer Fahrzeugscheibe verläuft, und das mit einem Lagerelement an der Kappe zusammenwirkt. Eines der Lagerelemente hat die Gestalt einer offenen Nabe und kann mit dem anderen, walzenförmigen Lagerelement zusammengeklippst werden. Somit kann die Kappe um die Lagerachse geschwenkt werden. Um die Kappe an der Anschlussvorrichtung zu fixieren, besitzt sie auf der Seite, die den Lagerelementen gegenüberliegt, Rastelemente, die mit Rastelementen an der Anschlussvorrichtung zusammenwirken und die geschlossene Position der Kappe sichern.

### Vorteile der Erfindung

Nach der Erfindung weist die Abdeckkappe einen öffenbaren und schließbaren Deckel mit einer Öffnung in seiner Deckwand auf, durch die der Wischerarm mit dem Adapter verbindbar ist. Dadurch wird die Montage erleichtert und ein sicherer Anschluss des Wischerarms an das Wischblatt gewährleistet.

Zweckmäßigerweise umfasst die Abdeckkappe die Anschlussvorrichtung und ist über diese geklippst, wobei der Deckel an seiner Innenseite die Begrenzungsfläche aufweist. Durch die Öffnung wird in einer geöffneten Stellung des Deckels ein hakenförmiges Ende des Wischerarms auf den Adapter montiert. In einer geschlossenen Stellung des Deckels ist dann das hakenförmige Ende in seiner montierten Stellung auf dem Adapter fixiert. Die Begrenzungsfläche, die zweckmäßigerweise durch einen Begrenzungssteg gebildet wird, der an der Innenseite des Deckels im Bereich einer Frontwand vorspringt, kann unmittelbar auf die äußere Kontur des hakenförmigen Endes wirken, und zwar unabhängig von elastisch nachgiebigen Rastnasen, die zusätzlich vorgesehen sein können, aber auch entfallen können. Da die Abdeckkappe die Anschlussvorrichtung umfasst und sich an ihren Seitenwänden und/oder ihrer Heckwand zweckmäßigerweise über Führungs-oder Stützrippen abstützt, wirken die Verriegelungskräfte über die Begrenzungsfläche, den Deckel und die Anschlusskappe auf die Anschlussvorrichtung, ohne die Lagerung des Adapters auf dem Gelenkbolzen zu belasten, sodass die Gelenkfunktion durch Kräfte nicht beeinträchtigt wird, die in Längsrichtung des Wischblatts wirken.

Der Deckel kann grundsätzlich beliebig mit der Abdeckkappe verbunden werden. Zweckmäßigerweise ist er im Bereich einer Heckwand der Abdeckkappe, die zum antriebsseitigen Ende des Wischblatts weist, schwenkbar an der Abdeckkappe gelagert. Um den Deckel in der geschlossenen Stellung zu fixieren, besitzt er im Bereich seiner Frontwand mindestens einen Rastzapfen, der in der geschlossenen Stellung in einer Rastöffnung an der Abdeckkappe eingreift. Die Rastverbindung kann durch Kräfte in Längsrichtung des Wischblatts nicht geöffnet werden.

Zur Lagerung des Deckels im Bereich der Heckwand der Abdeckkappe besitzt entweder dieser oder die Abdeckkappe mindestens eine offene Nabe, die mit einem walzenförmigen, am Umfang abgeflachten Lagerelement so zusammenwirkt, dass die offene Nabe in der vollständig geöffneten Stellung des Deckels über die Abflachungen des Lagerelements geschoben werden kann, während in einer halb geöffneten oder geschlossenen Stellung des Deckels die Nabe auf dem Lagerelement gehalten ist. Im betriebsbereiten Zustand wird die äußere Oberfläche der Gelenkverbindung weitgehend von der Abdeckkappe mit dem Deckel bestimmt, wobei die Teile bündig mit geringen Fugen oder Spalten harmonisch aneinander anschließen. Dadurch entsteht optisch ein gefälliges Design, das aufgrund seiner kompakten Form auch während der Fahrt strömungstechnische Vorteile bietet.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination.. Der Fachmann wird die Merkmale zweckmäßigerweise auch einzeln betrachten und zu sinnvollen weiteren Kombinationen zusammenfassen.

### Es zeigen:

- Fig. 1: eine perspektivische Ansicht einer Abdeckkappe mit einem Deckel vor der Montage,
- Fig. 2: eine perspektivische Ansicht eines Adapters,
- Fig. 3: eine perspektivische Ansicht einer Anschlussvorrichtung,
- Fig. 4: eine perspektivische Ansicht einer Abdeckkappe mit einem montierten, geschlossenen Deckel,
- Fig. 5: eine perspektivische Ansicht einer Anschlussvorrichtung mit einem vormontierten Adapter,
- Fig. 6: eine perspektivische Ansicht eines Wischblatts mit einem Gelenkanschluss während der Montage an eine Wischstange,
- Fig. 7: eine perspektivische Ansicht eines Wischblatts, das an einer Wischstange montiert ist, wobei der Deckel offen steht und
- Fig. 8: eine perspektivische Ansicht eines fertig montierten Wischblatts an einer Wischstange.

### Beschreibung der Ausführungsbeispiele

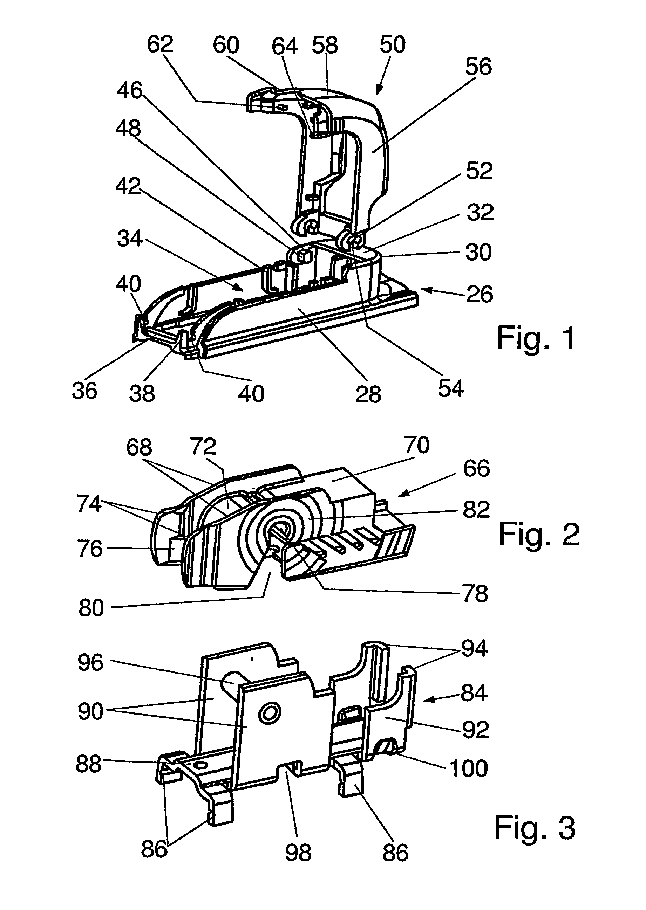

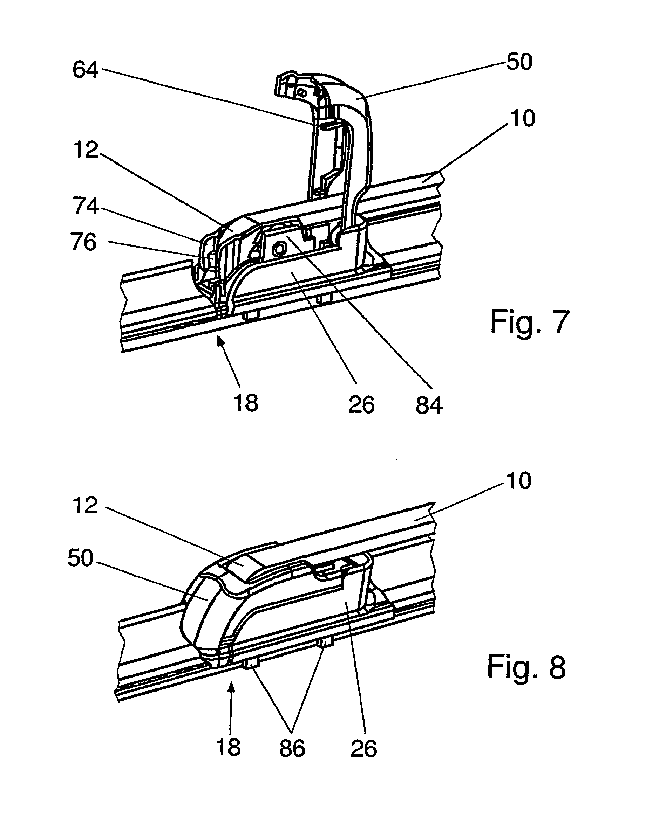

Eine Gelenkverbindung zwischen einem Wischblatt 18 und einer Wischstange 10 mit einem hakenförmigen Ende 12 (Fig. 8) umfasst eine Abdeckkappe 26 mit einem Deckel 50 (Fig. 1), einen Adapter 66 (Fig. 2) und eine Anschlussvorrichtung 84 (Fig. 3). Die Wischstange 10 ist Bestandteil eines Wischerarms und kann einstückig mit einem nicht dargestellten Gelenkteil des Wischerarms ausgeführt sein.

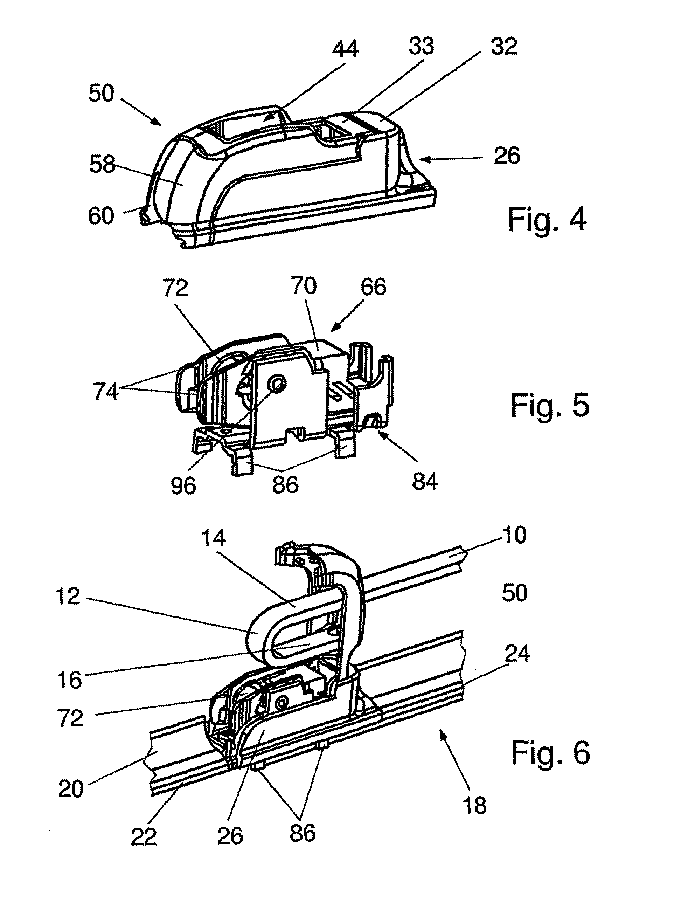

Die Abdeckkappe 26 besitzt zwei im Wesentlichen symmetrisch zu einer Längsmittelebene aufgebaute Seitenwände 28, die durch eine Heckwand 30 an der Heckseite und eine Strebe 36 an der Frontseite miteinander verbunden sind. Der durch die Seitenwände 28 gebildete Zwischenraum 34 kann durch einen Deckel 50 nach oben teilweise geschlossen werden. Der Deckel 50 besitzt im Bereich der Heckwand 30 in Verlängerung von Seitenwänden 56 auf jeder Seite eine offene Nabe 52, die in der geöffneten Position (Fig. 1) mit ihrer Öffnung 54 über einen walzenförmigen Lagerzapfen 46 geschoben werden kann, der an seinem Umfang entsprechend der Öffnung 54 ausgebildete Abflachungen 48 aufweist. Durch Schwenken des Deckels 50 in eine halb geschlossene oder ganz geschlossene Stellung (Fig. 4) verriegeln sich die Nabe 52 und der Lagerzapfen 46 gegenseitig. In der geschlossenen Stellung des Deckels 50 rasten Rastzapfen 62 an gegenüberliegenden Innenseiten des Deckels 50 in entsprechende Rastöffnungen 40 an den Seitenwänden 28 der Abdeckkappe 26 im Bereich der Strebe 36 ein. Zur Führung des Deckels 50 im Bereich der Strebe 36 sind seitlich an der Strebe 36 Führungszapfen 38 vorgesehen.

Der Adapter 66 besitzt zwei parallel verlaufende Seitenwangen 68, die durch eine zum Wischblatt 18 hin offene Nabe 78 verbunden sind. Die keilförmig sich nach außen erweiternde Öffnung ist mit 80 bezeichnet. Am äußeren Umfang der offenen Nabe 78 besitzt der Adapter 66 eine konvexe Anlagefläche 72 für das hakenförmige Ende 12 der Wischstange 10 und eine Auflagefläche 70 für die Innenseite eines oberen Schenkels 14 des hakenförmigen Endes 12. Seitlich wird das hakenförmige Ende 12 durch Teile der Seitenwangen 68 geführt, die über die Auflagefläche 70 und die Anlagefläche 72 vorstehen. An der Frontseite besitzt der Adapter 66 in Verlängerung der Seitenwangen 68 Seitenflügel 74, an denen innen Rastnasen 76 vorgesehen sind. Bei der Montage des hakenförmigen Endes 12 geben die Seitenflügel 74 nach außen elastisch nach, sodass das hakenförmige Ende 12 die Rastnasen 76 passieren kann. Am Ende der Montage nehmen die Seitenflügel 74 ihre Ausgangsposition wieder ein, wobei die Rastnasen 76 die Montageposition des hakenförmigen Endes 12 sichern. An den äußeren Seitenflächen der Seitenwangen 68 besitzt der Adapter 66 Anlaufflächen 82 oder entsprechende Rippen.

Die Anschlussvorrichtung 84 besitzt in Längsrichtung des Wischblatts 18 einen länglichen Boden 88, an dem an jeder Längsseite zwei Krallen 86 mit Abstand zueinander angeformt sind. Zwischen den Krallen 86 sind zwei parallel verlaufende Seitenwände 90 vorgesehen, die vom Wischblatt 18 weg weisen, und zwischen denen eine Gelenkachse 96 angeordnet ist. Zum antriebsseitigen Ende des Wischblatts 18 besitzt die Anschlussvorrichtung 84 hintere Seitenwände 92, die an ihrer hinteren Stirnseite jeweils einen nach innen angeformten Rand 94 aufweisen, das die antriebsseitige Begrenzung darstellt. Die Anschlussvorrichtung 84 kann aus Blech mittels spanloser Formgebung durch Stanzen, Biegen, Prägen, Tiefziehen oder dgl. hergestellt oder aus Kunststoff im Spritzgussverfahren gefertigt werden.

Die Fig. 1 bis Fig. 3 zeigen im Wesentlichen die Montagereihenfolge. Zunächst werden der Deckel 50 und die Abdeckkappe 26 zusammengefügt, indem die offenen Naben 52 über die Lagerzapfen 46 geschoben werden. Danach wird der Deckel 50 geschlossen, wobei die Rastzapfen 62 in die Rastöffnungen 40 einrasten. Die vormontierte Gruppe ist in Fig. 4 dargestellt. Die geschlossene Position zeigt, dass sich die Seitenwände 56 des Deckels mit einer geringen Fuge an die Seitenwände 28 der Abdeckkappe 26 anschließen. Die Deckwand 32 der Abdeckkappe 26 im Bereich der Heckwand 30 liegt in der gleichen Ebene wie die Deckwand 32 des Deckels 50, wobei die Ebene näher zur Wischleiste 22 verläuft als die obere Kontur des vorderen Teils des Deckels 50. Der Deckel 50 besitzt eine Frontwand 58, mit der der Zwischenraum 34 nach vorne abgedeckt ist. In der Frontwand 58 kann ein Anschlussprofil 60 für einen Spoiler 20 vorgesehen sein.

Im zweiten Montageschritt werden die Anschlussvorrichtung 84 und der Adapter 66 zusammengefügt und mittels der Krallen 86 an einem Tragelement 24 des Wischblatts 18 befestigt. Darauf wird die Abdeckkappe 26 mit dem Deckel 50 auf die Anschlussvorrichtung 84 geschoben, wobei sich die Abdeckkappe 26 über Führungsrippen 42 an den Seitenwänden 90, 92, 94 abstützt. Die Abdeckkappe 26 verrastet mit innen liegenden, nicht sichtbaren Rastnasen an Aussparungen und/oder Vertiefungen 98, 100 an Seitenwänden 90, 92.

Zur Montage des Wischblatts 18 an die Wischstange 10 des Wischerarms wird der Deckel 50 geöffnet und das hakenförmige Ende 12 in Längsrichtung des Wischblatts 18 durch die Öffnung 44 des Deckels 50 geschoben. Hat der untere Schenkel 16 des hakenförmigen Endes 12 die Anlagefläche 72 des Adapters 66 passiert, wird das Wischblatt 18 in Richtung des oberen Schenkels 14 verschoben, bis die Anlagefläche 70 an der Innenseite des oberen Schenkels 14 anliegt. Danach wird das Wischblatt 18 in Richtung des gebogenen Teils des hakenförmigen Endes 12 verschoben, bis die Innenfläche an der Anlagefläche 72 des Adapters 66 anliegt. Bei dieser Bewegung werden die Seitenflügel 74 mit den Rastnasen 76 elastisch vorübergehend nach außen gedrückt, sodass das hakenförmige Ende 12 passieren kann. In der Endstellung nehmen die Rastnasen 76 ihre Ausgangsstellung wieder ein, sodass sie das hakenförmige Ende 12 an der Anlagefläche 72 halten (Fig. 7). Beim Schlie-βen des Deckels 50 legt sich ein Begrenzungssteg 64 mit einer Begrenzungsfläche an die äußere Kontur des gebogenen Teils des hakenförmigen Endes 12, wodurch das hakenförmige Ende 12 unabhängig von den Rastnasen 76 an der Anlagefläche 72 gehalten wird. Der Begrenzungssteg 64 ist Bestandteil des Deckels 50 und springt ein Stück weit in den Zwischenraum 34 der Abdeckkappe 26, sodass er die beschriebene Funktion erfüllen kann. Fig. 8 zeigt, dass die geschlossene Gelenkverbindung sich harmonisch an das Wischblatt 18 anschließt und alle Forderungen eines strömungsgünstigen Designs erfüllt.

## Patentansprüche

1. Wischblatt(18) mit einer Anschlussvorrichtung (84) zum Anschließen eines Wischerarms (10), die einen schwenkbar gelagerten, mit Halteflächen (70, 72) für den Wischerarm (10) versehenen Adapter (66) und eine öffenbare und schließbare Abdeckkappe (26) aufweist, die in ihrer geschlossenen Stellung den Wischerarm (10) mit an einer Innenseite angeordneten Begrenzungsflächen (64) mittels der Halteflächen (70, 72) fixieren kann, **dadurch gekennzeichnet, dass** die Abdeckkappe (26) einen öffenbaren und schließbaren Deckel (50) mit einer Öffnung in seiner Deckwand aufweist, durch die der Wischerarm (10) mit dem Adapter (66) verbindbar ist.

2. Wischblatt (18) nach Anspruch 1, **dadurch gekennzeichnet, dass** die Abdeckkappe (26) die Anschlussvorrichtung (84) umfasst und über diese geklippst ist, wobei der Deckel (50) an seiner Innenseite die Begrenzungsfläche (64) aufweist, durch die in einer geschlossenen Stellung des Deckels (50) ein hakenförmiges Ende (12) des Wischerarms (10) in seiner montierten Stellung auf dem Adapter (66) fixiert ist.

3. Wischblatt (18) nach Anspruch 1 oder 2, **dadurch gekennzeichnet, dass** der Deckel (50) im Bereich einer Heckwand (30) der Abdeckkappe (26), die zum antriebsseitigen Ende des Wischblatts (18) weist, schwenkbar an der Abdeckkappe (26) gelagert ist.

4. Wischblatt (18) nach Anspruch 3, **dadurch gekennzeichnet, dass** entweder der Deckel (50) oder die Abdeckkappe (26) im Bereich der Heckseite (30) mindestens eine offene Nabe (52) aufweist, die mit einem walzenförmigen am Umfang abgeflachten Lagerelement (46) so zusammenwirkt, dass die offene Nabe (52) in der vollständig geöffneten Stellung des Deckels (50) über die Abflachungen (48) des Lagerelements (46) geschoben werden kann, während in einer halb geöffneten oder geschlossenen Stellung des Deckels (50) die Nabe (52) auf dem Lagerelement (46) gehalten ist.

5. Wischblatt (18) nach einem der Ansprüche 3 oder 4, **dadurch gekennzeichnet, dass** der Deckel (50) im Bereich seiner Frontwand (58) mindestens einen Rastzapfen (62) besitzt, der in der geschlossenen Stellung des Deckels (50) in eine Rastöffnung (40) an der Abdeckkappe (26) eingreift.

6. Wischblatt (18) nach einem der vorhergehenden Ansprüche, **dadurch gekennzeichnet, dass** ein Begrenzungssteg (64), der an der Innenseite des Deckels (50) im Bereich einer Frontwand (58) vorspringt, die Begrenzungsfläche bildet.

## Claims

1. Wiper blade (18) with a connecting device (84) for the connection of a wiper arm (10), said connecting device having a pivotably mounted adapter (66), which is provided with retaining surfaces (70, 72) for the wiper arm (10), and an openable and closable covering cap (26) which, in its closed position, with boundary surfaces (64) arranged on an inner side can fix the wiper arm (10) by means of the retaining surfaces (70, 72), **characterized in that** the covering cap (26) has an openable and closable cover (50) with an opening in its top wall, through which the wiper arm (10) can be connected to the adapter (66).

2. Wiper blade (18) according to Claim 1, **characterized in that** the covering cap (26) surrounds the connecting device (48) and is clipped over the latter, the inner side of the cover (50) having the boundary surface (64) by means of which, in a closed position of the cover (50), a hook-shaped end (12) of the wiper arm (10) is fixed in its fitted position on the adapter (66).

3. Wiper blade (18) according to Claim 1 or 2, **characterized in that** the cover (50) is mounted pivotably on the covering cap (26) in the region of a rear wall (30) of the covering cap (26), which rear wall faces the driving-side end of the wiper blade (18).

4. Wiper blade (18) according to Claim 3, **characterized in that** either the cover (50) or the covering cap (26) has, in the region of the rear side (30), at least one open hub (52) which interacts with a roller-shaped bearing element (46), which is flattened on the circumference, in such a manner that, in the fully open position of the cover (50), the open hub (52) can be pushed over the flattened portions (48) of the bearing element (46) while, in a semi-open or closed position of the cover (50), the hub (52) is retained on the bearing element (46).

5. Wiper blade (18) according to either of Claims 3 and 4, **characterized in that** the cover (50) has, in the region of its front wall (58), at least one latching pin (62) which, in the closed position of the cover (50), engages in a latching opening (40) on the covering cap (26).

6. Wiper blade (18) according to one of the preceding claims, **characterized in that** the boundary web (64) which projects on the inner, side of the cover (50) in the region of a front wall (58) forms the boundary surface.

## Revendications

1. Balai d'essuie-glace (18) comportant un dispositif d'accouplement (84) pour être relié à un bras d'essuie-glace (10), comportant un adaptateur (66) monté pivotant, muni de surfaces de fixation (70, 72) pour le bras d'essuie-glace (10) ainsi qu'un capot (26) susceptible d'être ouvert et fermé, et qui peut fixer en position fermée, le bras d'essuie-glace (10) avec ses surfaces de butée (64) prévues sur le côté intérieur, à l'aide des surfaces de fixation (70, 72),
**caractérisé en ce que**
le capot (26) comporte un couvercle (50) s'ouvrant et se fermant, le couvercle ayant un ouverture dans sa paroi supérieure à travers laquelle le bras d'essuie-glace (10) se relie à l'adaptateur (66).

2. Balai d'essuie-glace (18) selon la revendication 1,
**caractérisé en ce que**
le capot (26) comprend le dispositif d'accouplement (84) et il est clipsé par-dessus celui-ci, le couvercle (50) ayant sur son côté intérieur la surface de butée (64) par laquelle, en position de fermeture du couvercle (50), l'extrémité (12) en forme de crochet du bras d'essuie-glace (10) est fixée sur l'adaptateur (66) dans sa position installée.

3. Balai d'essuie-glace (18) selon la revendication 1 ou 2,
**caractérisé en ce que**
dans la région de la paroi arrière (30) du capot (26), le couvercle (50) est tourné vers l'extrémité côté entraînement du balai (18) en étant relié de façon pivotante au capot (26).

4. Balai d'essuie-glace (18) selon la revendication 3,
**caractérisé en ce que**
dans la région du côté arrière (30), le couvercle (50) ou le capot (26) comporte au moins un moyeu ouvert (52) coopérant avec un élément de palier (46) en forme de cylindre, dont la périphérie est aplatie,
le moyeu ouvert (52) pouvant se glisser par-dessus les aplats (48) de l'élément de palier (46) lorsque le couvercle (50) est en position d'ouverture complète, alors que dans une position semi-ouverte ou position fermée du couvercle (50), le moyeu (52) est tenu sur l'élément de palier (46).

5. Balai d'essuie-glace (18) selon l'une des revendications 3 ou 4,
**caractérisé en ce que**
dans la région de sa paroi frontale (58), le couvercle (50) comporte au moins un goujon d'enclipsage (62) qui pénètre dans un orifice d'enclipsage (40) du capot (26) lorsque le couvercle (50) est en position fermée.

6. Balai d'essuie-glace (18) selon l'une des revendications précédentes,
**caractérisé par**
une entretoise de butée (64) qui vient en saillie du côté intérieur du couvercle (50) dans la région de la paroi frontale (58) et forme la surface de butée.
